# FASCICULE DE BREVET EUROPEEN

(11) **EP 0 835 482 B1**
(45) Date de publication et mention de la délivrance du brevet: **14.07.1999**
(21) Numéro de dépôt: 96915072.1
(22) Date de dépôt: 23.04.1996
(51) Int. Cl.: G05D 16/20, F16K 31/06, F15B 13/044, B60T 8/36, F16H 61/02

(54) **ELECTROVALVE DE REGULATION DE PRESSION POUR CIRCUIT HYDRAULIQUE**
DRUCKREGELNDES ELEKTROMAGNETVENTIL FÜR HYDRAULISCHEN KREIS
PRESSURE REGULATOR ELECTROVALVE FOR HYDRAULIC CIRCUIT

(30) Priorité: 26.06.1995 FR 9507667
(43) Date de publication de la demande: 15.04.1998
(73) Titulaire: Bosch Systemes de Freinage, 93700 Drancy (FR)
(72) Inventeur: BOURLON, Philippe, F-93300 Aubervilliers (FR); QUIRANT, Werner, F-93500 Pantin (FR)
(86) Numéro de dépôt international: FR9600613
(87) Numéro de publication internationale: WO9701806

(56) Documents cités:
- EP-A- 0 452 174
- DE-A- 4 206 210
- US-A- 5 248 191
- US-A- 5 377 720
- PATENT ABSTRACTS OF JAPAN vol. 18, no. 136 (M-1572), 7 Mars 1994 & JP,A,05 319236 (NISSIN KOGYO KK), 3 Décembre 1993,
- PATENT ABSTRACTS OF JAPAN vol. 18, no. 136 (M-1572), 7 Mars 1994 & JP,A,05 319246 (NISSIN KOGYO KK), 3 Décembre 1993,
- PATENT ABSTRACTS OF JAPAN vol. 18, no. 469 (M-1666), 31 Août 1994 & JP,A,06 147349 (NISSIN KOGYO KK), 27 Mai 1994,

## Description

La présente invention concerne les électrovalves de régulation de pression pour circuits hydrauliques, plus particulièrement mais non exclusivement destinées aux circuits de freinage des véhicules automobiles, dotés d'un système d'antiblocage des roues au freinage ou d'un système d'antipatinage des roues à l'accélération.

Les systèmes actuels d'antiblocage des roues mettent en oeuvre, entre une source de fluide sous pression et un récepteur de pression tel qu'un moteur de frein, une électrovalve commandée par un calculateur en fonction de signaux représentatifs de la vitesse de rotation des roues pour, de façon générale, détendre la pression du fluide dans le moteur de frein lorsque le calculateur détecte l'imminence du blocage de la roue associée à ce moteur de frein, puis connecter une deuxième source de fluide sous pression pour augmenter de nouveau la pression hydraulique dans le moteur de frein, jusqu'à ce qu'un nouveau blocage soit détecté comme imminent, le cycle de détente et de remontée en pression se renouvelant alors.

De même, les systèmes connus d'antipatinage des roues mettent en oeuvre une électrovalve pour, de façon générale, augmenter la pression du fluide dans le moteur de frein lorsque le calculateur détecte la nécessité du freinage de la roue associée à ce moteur de frein, puis connecter une deuxième source de fluide sous basse pression pour détendre la pression hydraulique dans le moteur de frein, jusqu'à ce qu'un nouveau freinage soit nécessaire, le cycle de remontée en pression et de détente pouvant alors se renouveler.

Les électrovalves utilisées pour commander la pression de freinage fonctionnent la plupart du temps en tout ou rien, une électrovalve étant utilisée pour détendre la pression dans le moteur de frein, et une autre pour la remontée en pression dans ce moteur de frein, et ce pour chaque roue du véhicule.

Ces phases successives de détente et de remontée en pression durent chacune un temps très court et se succèdent rapidement, d'où il en résulte que les électrovalves changent de nombreuses fois d'état rapidement. Ceci provoque un bruit important dû au battement de la partie mobile de ces électrovalves, accompagné par des à-coups de pression dans les moteurs de frein, engendrant des régimes transitoires mal contrôlés.

Pour éviter ces inconvénients, on a proposé depuis, par exemple dans les documents FR-A-2 679 299 ou FR-A-2 683 338, d'utiliser des électrovalves à trois voies, de type proportionnelles. Elles permettent d'une part de n'utiliser qu'une seule électrovalve par roue du véhicule à commander, et d'autre part elles ont un fonctionnement beaucoup plus silencieux.

De telles électrovalves proportionnelles ont toutefois encore l'inconvénient de présenter un encombrement important. En effet, ces électrovalves sont la plupart du temps constituées d'une partie purement électrique incluant le bobinage électrique, les pièces polaires et un noyau magnétique mobile, et une partie purement hydraulique incluant un tiroir distributeur coulissant dans un alésage ou une chemise formés dans un corps comportant différents conduits hydrauliques, la liaison entre ces deux parties étant effectuée par un poussoir solidaire du noyau magnétique mobile sur lequel vient en appui le tiroir distributeur.

Une telle disposition en ligne des parties électrique et hydraulique confère aux électrovalves connues des dimensions longitudinales qui peuvent rendre difficile, ou même impossible leur implantation dans les cas où la place qui leur est dévolue est trop limitée.

La présente invention a donc pour objet de proposer une électrovalve de régulation de pression qui présente un encombrement réduit, et ceci sans augmenter ni les difficultés de fabrication ni par conséquent le coût, et dont le fonctionnement soit fiable en toutes circonstances.

Dans ce but, l'invention propose une électrovalve de régulation de pression pour un circuit hydraulique comprenant au moins un générateur de fluide sous pression, un récepteur de pression et un réservoir de fluide sous basse pression, l'électrovalve comportant un bobinage électrique coopérant avec deux pièces polaires, un corps magnétique mobile sous l'effet d'une force d'actionnement engendrée par un champ magnétique créé par le bobinage électrique, et un élément distributeur coopérant avec une structure de chemise pour commander la communication entre un conduit relié au récepteur de pression et l'un ou l'autre de conduits reliés au générateur de fluide sous pression et au réservoir de fluide sous basse pression, l'électrovalve comportant au moins une chambre de réaction communicant en permanence avec le récepteur de pression et déterminant une force de réaction se combinant à la force d'actionnement engendrée par le bobinage à l'encontre de la force engendrée par un moyen élastique sur le corps magnétique mobile.

Une telle électrovalve de régulation de pression est connue par exemple des documents DE-A-4 206 210 et US-A-5 248 191.

Selon la présente invention, la structure de chemise est fixe par rapport aux pièces polaires, l'élément distributeur coulissant à l'intérieur de la structure de chemise et étant susceptible d'être mis en mouvement par le corps magnétique mobile coulissant autour de la structure de chemise.

Selon un mode de réalisation, l'électrovalve a une caractéristique négative, c'est à dire qu'à une augmentation du courant circulant dans le bobinage correspond une diminution de la pression dans le récepteur de pression.

Selon un second mode de réalisation, l'électrovalve a une caractéristique positive, c'est à dire qu'à une augmentation du courant circulant dans le bobinage correspond une augmentation de la pression dans le récepteur de pression.

L'invention sera mieux comprise, et d'autres buts, caractéristiques et avantages de celle-ci apparaîtront plus clairement à la lecture de la description qui suit d'un mode de réalisation préféré, donné à titre d'exemple non limitatif et en référence au dessin annexé sur lequel :
- La Figure 1 représente schématiquement en coupe un mode de réalisation d'une électrovalve conforme à la présente invention;
- La Figure 2 représente schématiquement en coupe une première variante du mode de réalisation de la Figure 1;
- La Figure 3 représente schématiquement en coupe une deuxième variante du mode de réalisation de la Figure 1;
- La Figure 4 représente schématiquement en coupe un second mode de réalisation d'une électrovalve conforme à la présente invention;
- La Figure 5 représente schématiquement en coupe une première variante du mode de réalisation de la Figure 4, et
- La Figure 6 représente schématiquement en coupe une deuxième variante du mode de réalisation de la Figure 4.

Sur les différentes Figures, les éléments correspondants sont repérés par le même chiffre de référence, éventuellement affecté d'un « prime» et/ou augmenté de 100.

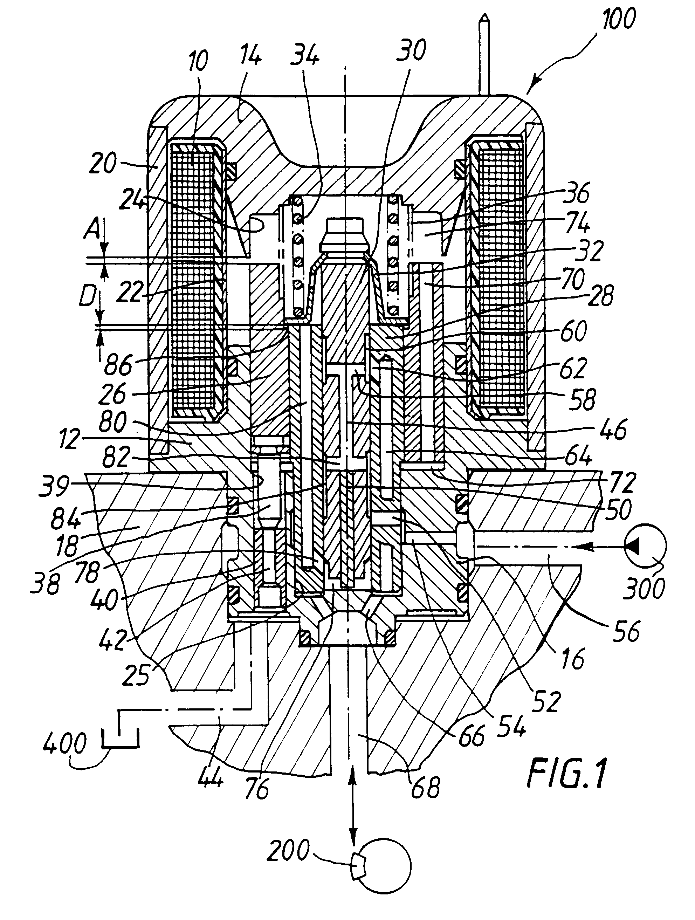

L'électrovalve représentée sur la Figure 1, et désignée dans son ensemble par la référence 100, est destinée à être insérée dans un circuit hydraulique pour moduler la pression dans un récepteur de pression 200 en reliant ce dernier soit à un générateur de fluide sous pression 300, soit à un réservoir de fluide sous basse pression 400, sous la commande d'un calculateur ou d'un microprocesseur (non représentés).

L'électrovalve 100 comporte un bobinage électrique 10 susceptible de faire circuler un flux magnétique dans deux pièces polaires 12 et 14, la pièce polaire 12 par exemple étant formée avec un prolongement axial 16 servant d'embase de fixation de l'électrovalve 100 sur un support 18. Le bobinage 10 est situé dans un volume délimité extérieurement par une carcasse cylindrique en matériau magnétique 20 et intérieurement par un manchon cylindrique en matériau amagnétique 22, des joints assurant l'étanchéité entre le manchon 22 et chacune des pièces polaires 12 et 14.

Ainsi assemblées, les pièces polaires 12 et 14 définissent un alésage interne commun 24, dont la partie formée dans la pièce polaire 12 est borgne et étagée, avec une partie de plus petit diamètre 25. Dans la partie de plus grand diamètre de l'alésage 24 coulisse un corps magnétique 26 en acier doux ou très doux, qui est soumis au flux magnétique circulant dans les pièces polaires 12 et 14 et dans la carcasse 20 de façon à former un circuit magnétique pratiquement fermé.

La pièce polaire 14 est conformée de façon à ce que l'électrovalve 100 ait un fonctionnement du type proportionnel. De façon plus précise, on sait que le bobinage des électrovalves de ce type présente la caractéristique essentielle de pouvoir fournir un effort sensiblement constant pour un courant déterminé dans une plage de déplacement appréciable du corps magnétique 26, de l'ordre de plusieurs millimètres. Cette caractéristique est mise à profit dans la présente invention pour assurer la fonction recherchée de modulation de pression par la modulation du courant électrique circulant dans le bobinage 10.

Une électrovalve de ce type présente alors l'avantage de pouvoir être commandée en faisant simplement varier le courant circulant dans le bobinage sans faire battre la partie mobile, et sans provoquer d'à-coups de pression dans les récepteurs de pression. De plus, une telle électrovalve peut facilement être commandée par un microprocesseur assurant par exemple un découpage d'un courant continu à une fréquence variable, ou à une fréquence fixe et avec un rapport cyclique variable, ou encore par modulation de largeur d'impulsions.

Le corps magnétique 26 est formé avec un alésage axial de façon à coulisser sur une structure de chemise 28, solidaire de la pièce polaire 12 et de l'embase 16, par exemple par emmanchement à force dans la partie de plus petit diamètre 25 de l'alésage étagé borgne de l'embase 16.

La chemise 28 est elle-même formée avec un alésage axial recevant à coulissement un élément distributeur 30, dont l'extrémité située du côté de la pièce polaire 14 est solidaire d'une coupelle 32.

Un ressort de compression 34 est interposé entre la pièce polaire 14 et la coupelle 32, de façon à faire porter cette dernière, au repos, sur l'extrémité de la chemise 28, et à déterminer ainsi la position de repos du distributeur 30 à l'intérieur de la chemise 28.

Une extrémité du corps magnétique 26 est conformée pour maintenir prisonnière avec un jeu axial limité la tête d'un élément cylindrique 38, dont le corps peut coulisser librement dans un alésage 39 formé dans l'embase 16.

Un second ressort de compression 36 est interposé entre la pièce polaire 14 et le corps magnétique 26 pour solliciter ce dernier vers une position de repos dans laquelle le corps magnétique 26 vient mettre en butée l'élément 38 sur une pièce 40, frettée ou montée à force dans l'alésage 39 de l'embase 16, et pourvue d'un conduit axial 42, débouchant dans un passage 44 formé dans le support 18 et relié au réservoir de fluide sous basse pression 400. Dans cette position de repos, l'élément 38 vient donc fermer le conduit 42. Il forme ainsi un clapet, commandé par le corps magnétique 26, permettant ou interdisant la communication avec le réservoir 400, selon la position du corps 26.

Le distributeur 30 est formé avec un alésage axial borgne 46 qui reçoit de façon quasi-étanche une aiguille 50 en appui sur le fond de l'alésage 25 de l'embase 16.

Un alésage radial 52 est formé dans la chemise 28, et débouche dans une gorge circulaire formée dans l'alésage 25, communicant par un conduit radial 54 de l'embase 16 avec un passage 56 du support 18 relié au générateur de fluide sous pression 300.

L'alésage 46 du distributeur 30 communique en permanence par un perçage radial 58 et une gorge périphérique 60 avec un perçage radial 62 pratiqué dans la chemise 28, le perçage 62 débouchant dans un perçage axial borgne 64 de la chemise 28. Le perçage 64 communique, par l'intermédiaire de l'espace situé entre l'extrémité de la chemise 28 et le fond de l'alésage 25, avec un conduit 66 formé dans l'embase 16, lui-même en communication avec un passage 68 du support 18 relié au récepteur de pression 200.

Un perçage axial 70 est formé dans le corps magnétique 26 pour faire communiquer les chambres 72 et 74 situées de part et d'autre du corps 26, et formées avec les pièces polaires 12 et 14 respectivement.

De même, la chambre 76 formée à l'extrémité du distributeur 30 avec le fond de l'alésage de l'embase 16 communique avec la chambre 74 au moyen d'un perçage radial 78 et d'un perçage axial 80 formés dans la chemise 28.

Enfin, l'alésage 46 du distributeur 30 communique au repos par un perçage radial 82 et une gorge périphérique 84 avec l'alésage 52, relié en permanence au générateur de fluide sous pression 300 comme on l'a vu plus haut.

Le fonctionnement de l'électrovalve dont la structure vient d'être décrite va maintenant être exposé, cette électrovalve étant par exemple insérée dans un système d'antiblocage des roues d'un véhicule automobile.

Au repos, c'est à dire en l'absence de courant électrique circulant dans le bobinage 10, les différents éléments composant l'électrovalve occupent la position représentée sur la Figure 1. En particulier, sous l'action du ressort 36 en appui sur le corps magnétique 26, ce dernier maintient l'élément 38 en appui sur son siège 40 et interdit la communication entre la chambre 72 et le passage 44 vers le réservoir de fluide sous basse pression 400.

Le fluide sous pression fourni par le générateur 300 parvient au récepteur de pression 200, un moteur de frein dans l'application préférée de l'invention, par le passage 56, le conduit 54, l'alésage 52, la gorge 84, le perçage 82, l'alésage 46, le perçage 58, la gorge 60, les perçages 62 et 64, le conduit 66 et le passage 68, pour assurer le freinage du véhicule.

Lorsque le calculateur détecte, au moyen de capteurs de vitesse de rotation des roues (non représentés), l'imminence du blocage de la roue associée au moteur de frein 200, il commande alors l'augmentation du courant dans le bobinage 10. Ce courant engendre, par l'intermédiaire des pièces polaires 12 et 14, une force sur le corps magnétique 26 qui se déplace à l'encontre de l'action du ressort 36, dont la précontrainte au repos peut être assez faible, mais suffisante pour garantir, en position de repos, la fermeture du passage de valve 38-40.

Le corps magnétique se déplace alors d'une distance D jusqu'à ce qu'un épaulement 86 vienne en appui sur le bord extérieur de la coupelle 32, qui présente alors une résistance à l'avancement égale à la précontrainte F₀ au repos du ressort 34. Le déplacement du corps magnétique 26 est d'autre part facilité par la présence du perçage 70 entre les chambres 72 et 74, assurant l'égalité des pressions de part et d'autre du corps magnétique 26 dans toutes ses positions et dans toutes les phases de fonctionnement.

Tout au début de ce déplacement du corps magnétique, l'élément 38 se trouve soulevé de son siège 40, mettant ainsi en communication le réservoir de fluide sous basse pression 400 avec les chambres 72 et 74 réunies par le perçage 70, et avec la chambre 76 reliée à la chambre 74 par les perçages 78 et 80.

La distance D est prédéterminée pour qu'elle corresponde sensiblement à une des limites de la plage de déplacement du corps magnétique 26, évoquée plus haut, et pour laquelle le fonctionnement de l'électrovalve est de type proportionnel. Autrement dit, les caractéristiques du bobinage 10 sont prédéterminées pour qu'à cet instant du fonctionnement, l'intensité I₀ du courant circulant dans le bobinage 10 engendre sur le corps magnétique 26 une force Φ₀ égale et de sens opposé à la force F₀. Pour toute valeur I de l'intensité du courant supérieure à I₀, le corps magnétique 26 sera soumis à une force Φ proportionnelle à la quantité (I-I₀).

Le corps magnétique 26 pourra alors comprimer le ressort 34 d'une quantité d, en ayant à vaincre un effort résistant F, supérieur à F₀, et proportionnel à la valeur d de la compression du ressort 34. La raideur du ressort 34 sera alors prédéterminée pour réaliser l'équilibre des forces F et Φ sur le corps magnétique 26 et obtenir ainsi un fonctionnement optimal de l'électrovalve.

Dans ces conditions, l'intensité du courant augmentant dans le bobinage 10, le corps magnétique 26 se déplace en comprimant le ressort 34, et en entraînant dans son mouvement le distributeur 30 par l'intermédiaire de la coupelle 32, de sorte que la communication entre l'alésage 52 et la gorge 84 se trouve interrompue, de même que la fourniture de fluide sous pression au moteur de frein 200 par le générateur 300.

L'intensité du courant augmentant encore, un déplacement supplémentaire du corps magnétique 26 et du distributeur 30 amène la gorge 60 en communication avec la chambre 74. Le moteur de frein 200 se trouve donc mis en communication avec le réservoir de fluide sous basse pression 400 par l'intermédiaire du passage 68, du conduit 66, des perçages 64 et 62, la gorge 60, la chambre 74, le perçage 70, la chambre 72, et le passage de valve 38-40 qui est alors ouvert.

La pression dans le moteur de frein 200 peut donc décroître, ce qui fait disparaître le risque de blocage de la roue associée au moteur de frein 200.

De plus, la gorge 60 du distributeur 30 est dimensionnée pour que, dans toutes les positions du distributeur 30 et du corps magnétique 26, elle communique avec le perçage 62. Il en résulte que l'alésage 46 est en communication permanente avec le moteur de frein 200 par le perçage 58, la gorge 60, les perçages 62 et 64, le conduit 66 et le passage 68. La pression qui s'exerce dans l'alésage 46 sur le distributeur 30, sur la section transversale de ce dernier correspondant à la section transversale de l'aiguille 50 est donc en permanence égale à la pression régnant dans le moteur de frein 200. L'alésage 46 constitue donc une chambre de réaction hydraulique, en coopération avec l'aiguille 50, coulissant de façon quasi-étanche dans l'alésage 46.

Ceci a pour effet que le mouvement du corps magnétique 26 et du distributeur 30, produit par le courant circulant dans le bobinage 10, est favorisé par la réaction hydraulique dans la chambre de réaction 46 qui crée une force s'ajoutant à celle qui est créée par le bobinage 10, et opposée à celle qu'exerce le ressort 34.

Lorsque l'intensité du courant augmente, la pression dans le moteur de frein 200 décroît. Il en résulte que la force de réaction hydraulique due à la chambre de réaction 46 diminue également, ce qui facilite ainsi l'action due au bobinage 10.

Lorsque le calculateur détecte, dans cette phase de fonctionnement du système d'antiblocage, que la roue associée au moteur de frein 200 a acquis une vitesse de rotation trop importante, il commande une diminution du courant circulant dans le bobinage 10. La force Φ devient alors inférieure à la force F, de sorte que l'action du ressort 34 devient prépondérante et repousse le corps magnétique 26 et le distributeur 30 en direction de leur position de repos initiale.

Dans ce mouvement, la communication entre la chambre 74 et la gorge 60 se trouve d'abord interrompue, de même que la communication du moteur de frein 200 avec le réservoir 400. Puis, l'intensité du courant diminuant encore, un déplacement supplémentaire du distributeur 30 amène la gorge 84 en communication avec l'alésage 52. Le générateur 300 se trouve donc de nouveau mis en communication avec le moteur de frein 200, de sorte que la pression dans ce dernier peut alors croître.

La pression dans la chambre de réaction 46 croît également, de sorte que la force de réaction hydraulique due à la chambre de réaction 46 augmente, s'opposant à l'action du ressort 34, et facilitant là encore l'action due au bobinage 10.

Le processus qui vient d'être décrit se reproduit si la tendance de la roue au blocage persiste, et ce jusqu'à l'arrêt complet du véhicule ou jusqu'à ce que le conducteur du véhicule ait mis fin à l'action de freinage. Le calculateur interrompt alors l'excitation du bobinage 10, de sorte que le distributeur 30 et le corps magnétique 26 retournent dans leurs positions de repos initiales, en étant sollicités tous deux d'abord par le ressort 34 jusqu'à ce que la coupelle 32 vienne en appui sur l'extrémité de la chemise 28, puis le corps magnétique 26 étant sollicité par le ressort 36, jusqu'à ce que le corps magnétique 26 vienne mettre en butée l'élément 38 sur son siège 40.

On comprend ainsi qu'en modulant de façon appropriée l'intensité du courant circulant dans le bobinage 10, le corps magnétique 26 prend une position qui est fonction de la pression régnant dans la chambre de réaction 46, et donc dans le moteur de frein 200. On pourra ainsi appliquer au moteur de frein 200 exactement la pression désirée, proportionnelle à l'intensité du courant circulant dans le bobinage 10.

On voit donc bien que l'on a réalisé une électrovalve dont l'encombrement est réduit dans une large mesure, grâce à la disposition du système de distribution de fluide à l'intérieur du bobinage d'électroaimant.

Ce système de distribution est constitué de la chemise 28 fixe, à l'intérieur de laquelle coulisse le distributeur 30, et autour de laquelle coulisse le corps magnétique 26 pour commander le mouvement ou la position du distributeur 30.

Cette électrovalve présente par ailleurs de nombreux avantages. En effet, on a vu que l'embase 16 comporte à la fois le conduit de liaison 42 avec le réservoir 400, le conduit de liaison 66 avec le moteur de frein 200 et le conduit de liaison 54 avec le générateur 300. La présence de ces trois conduits dans la même embase permet d'obtenir une électrovalve qu'il suffit d'insérer dans son support 18 pour la rendre immédiatement opérationnelle sans autre opération. On pourra à cet effet prévoir que la connexion électrique d'alimentation du bobinage 10 soit également prévue sur le support 18. De plus, on pourra intégrer dans ce support 18 le générateur 300 lui-même, soutirant le fluide dont il a besoin dans le passage 44, ce qui permet de raccourcir et de simplifier les diverses connexions hydrauliques.

D'autre part, la chemise 28 est fixée dans la pièce polaire 12 et assure en particulier le guidage en coulissement du corps magnétique 26. Une telle conception permet de maîtriser très facilement et très précisément les jeux ou entrefers fonctionnels, tels que la distance radiale entre la surface extérieure du corps magnétique 26 et l'alésage 24, et la distance axiale A au repos entre l'extrémité intérieure de la pièce polaire 14 et la surface terminale du corps magnétique 26.

Il est ainsi possible de maîtriser ces valeurs sans employer de tubes de guidage en matériau amagnétique comme cela est courant dans la technologie des électrovalves. Ces tubes sont nécessairement très fins, et donc de réalisation et de manipulation délicates, et de plus ils induisent des frottements parasites non négligeables, qui sont à l'origine de phénomènes d'hystérésis difficiles à contrôler. La présente invention, en permettant de se dispenser de l'emploi de ces tubes, procure ainsi une électrovalve beaucoup plus simple et fiable que celles de l'art antérieur, avec des coûts de fabrication et de maintenance notablement réduits.

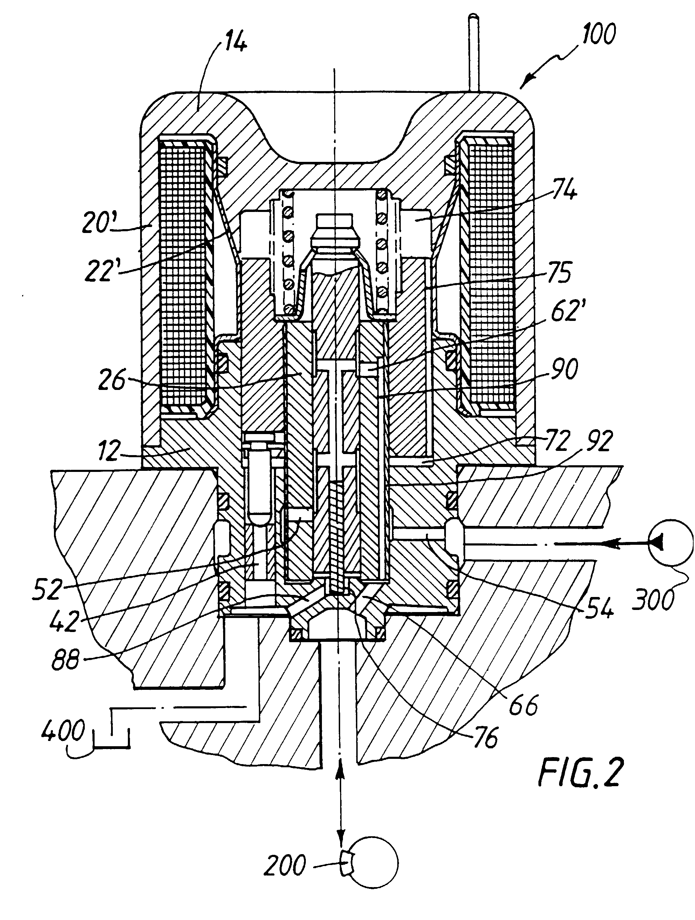

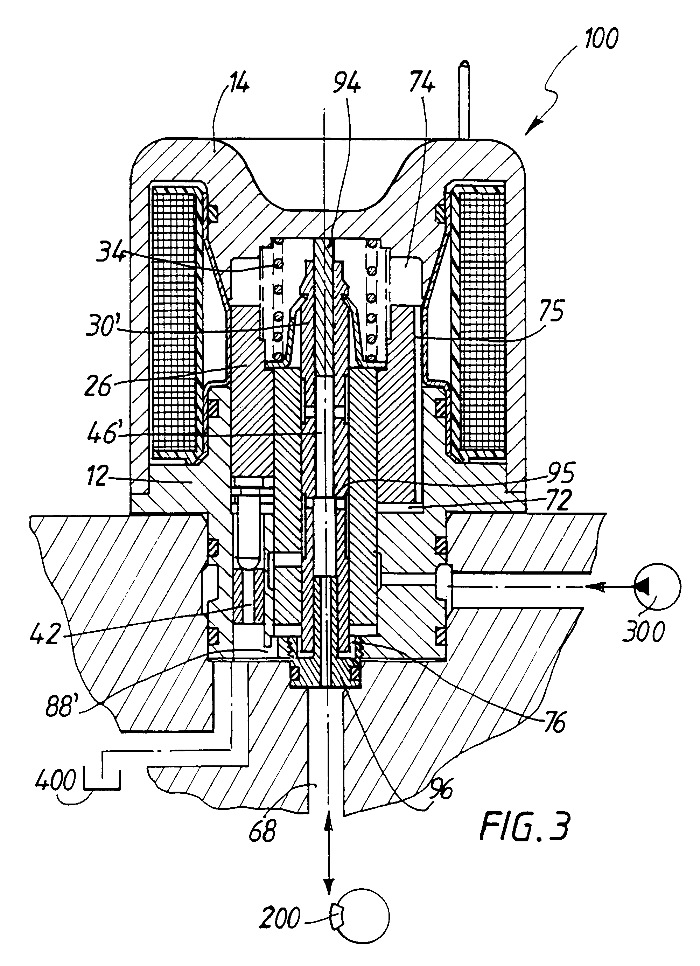

Diverses modifications et variantes peuvent être apportées à l'électrovalve qui vient d'être décrite, et qui sont représentées sur les Figures 2 et 3.

En référence à la Figure 2, on voit que l'on peut réaliser la pièce polaire 14 et la carcasse 20' d'une seule pièce, de façon à faciliter le centrage de cette pièce polaire 14 par rapport à la pièce polaire 12. On voit également que l'on peut donner au manchon en matériau amagnétique 22' une forme épousant celles des pièces polaires 12 et 14, de façon à limiter le volume de fluide utilisé, et à faciliter la purge de l'électrovalve.

D'autre part, on peut éviter de pratiquer les perçages 78 et 80 dans la chemise 28 en reliant la chambre 76 directement au conduit 42 au moyen d'un perçage radial 88. D'autre part, l'équilibrage des pressions entre les chambres 72 et 76 est obtenu au moyen de rainures axiales 75, pratiquées à la périphérie extérieure du corps magnétique 26. De telles rainures sont en effet plus faciles à usiner que des perçages longitudinaux.

On voit également sur la Figure 2 que l'on peut aussi éviter de pratiquer les perçages 62 et 64 dans la chemise 28. Pour ce faire, des rainures axiales 90 sont pratiquées à la périphérie extérieure de la chemise 28, et un fourreau 92 est disposé autour de la chemise 28. Les rainures 90 font ainsi communiquer le conduit 66 avec un perçage radial 62' dans la chemise 28, jouant le même rôle que le perçage 62 de la Figure 1.

Des ouvertures sont pratiquées dans le fourreau 92 pour faire communiquer le conduit 54 de liaison avec le générateur 300 avec l'alésage radial 52 dans la chemise 28.

On peut ainsi simplifier dans une large mesure l'usinage de la chemise 28. Le fonctionnement de l'électrovalve de la Figure 2 est par ailleurs totalement identique à celui de l'électrovalve de la Figure 1 et ne sera donc pas exposé en détail.

On a représenté sur la Figure 3 une variante des modes de réalisation précédents. Le distributeur 30 est ici formé avec un alésage axial étagé traversant 46'. Le distributeur 30' coulisse de façon étanche, par sa partie de plus petit diamètre, autour d'une aiguille 94, assurant l'étanchéité entre la chambre 74 et l'alésage 46'. L'aiguille 94 est en appui sur la pièce polaire 14, ou est solidaire de cette dernière par exemple par vissage.

Le distributeur 30' coulisse par ailleurs de façon étanche, par sa partie de plus grand diamètre, autour d'une aiguille creuse 96, solidaire de la pièce polaire 12 par exemple par vissage. L'aiguille creuse 96 assure l'étanchéité entre la chambre 76 et l'alésage 46', tout en permettant la communication entre cet alésage 46' et le passage 68 relié au récepteur de pression 200. La chambre 76 est en communication permanente avec le conduit 42 et le réservoir 400 par un perçage 88' dans la pièce polaire 12. Un épaulement radial 95 sépare les deux parties de plus petit et de plus grand diamètre de l'alésage 46'.

Le fonctionnement de l'électrovalve représentée sur la Figure 3 est identique à celui qui a été décrit en relation avec la Figure 1. En particulier, la pression qui s'exerce dans l'alésage 46' sur le distributeur 30', sur la section transversale de ce dernier correspondant à la section transversale de l'épaulement radial 95 est en permanence égale à la pression régnant dans le moteur de frein 200. L'alésage 46' constitue ainsi une chambre de réaction hydraulique, par l'intermédiaire de l'épaulement 95.

Comme précédemment, ceci a pour effet que le mouvement du corps magnétique 26 et du distributeur 30, produit par le courant circulant dans le bobinage 10, est favorisé par la réaction hydraulique dans la chambre de réaction 46' qui crée une force s'ajoutant à celle qui est créée par le bobinage 10, et opposée à celle qu'exerce le ressort 34, ce qui facilite l'action due au bobinage 10.

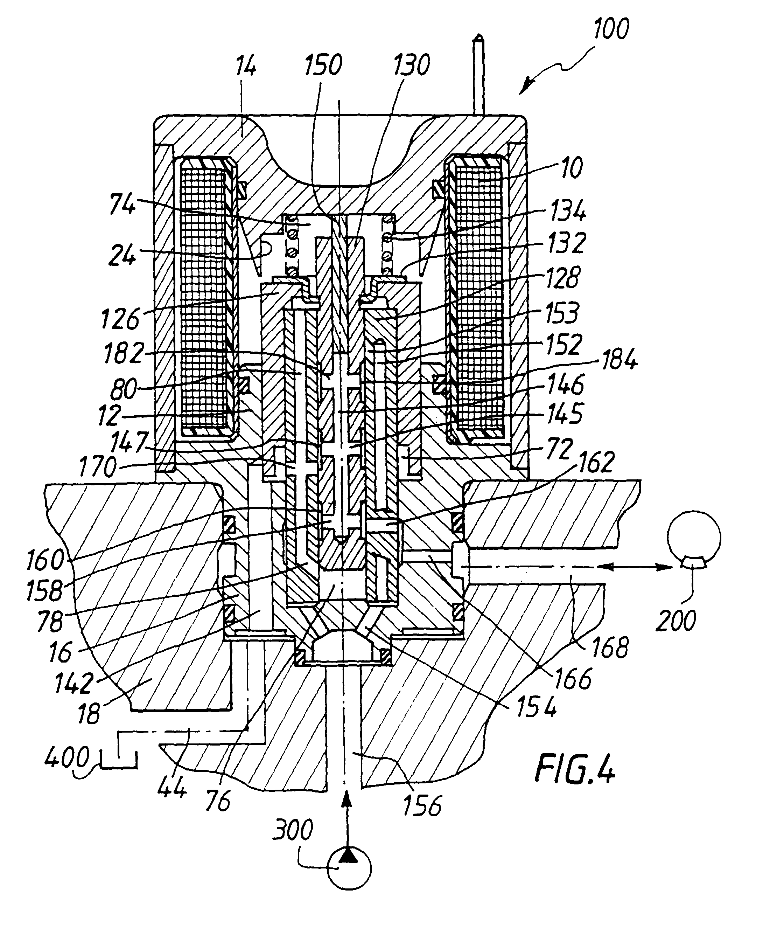

On a représenté sur la Figure 4 un second mode de réalisation de l'électrovalve selon la présente invention.

Comme dans le premier mode de réalisation, le distributeur 130 coulisse dans la chemise 128 en étant mis en mouvement par le corps magnétique mobile 126 coulissant autour de la chemise 128, solidaire de la pièce polaire 12 et de l'embase 16. Il est formé avec un alésage borgne 146 qui reçoit de façon quasi-étanche une aiguille 150 en appui sur la pièce polaire 14, dans le fond de l'alésage 24.

Les chambres 74 et 76 aux extrémités du distributeur 130 communiquent entre elles au moyen des perçages axial 80 et radial 78 formés dans la chemise 128. Un perçage radial 170 dans la chemise 128 fait communiquer le perçage axial 80 avec la chambre 72, cette dernière étant en communication permanente avec le réservoir 400 par le conduit 142 et le passage 44. Les chambres 72, 74 et 76 communiquent donc en permanence entre elles et avec le réservoir 400.

L'alésage 146 du distributeur 130 communique en permanence par un perçage radial 158 et une gorge périphérique 160 avec un perçage radial 162 pratiqué dans la chemise 128, le perçage 162 communicant avec un conduit 166 formé dans l'embase 16, lui-même en communication avec un passage 168 du support 18 relié au récepteur de pression 200.

L'alésage 146 est susceptible de communiquer avec le générateur de fluide sous pression 300 par l'intermédiaire d'un perçage radial 182, une gorge périphérique 184, un perçage radial 153 et un perçage axial 152 pratiqués dans la chemise 128, le conduit 154 et le passage 156.

Enfin, l'alésage 146 est relié au réservoir de fluide sous base pression 400 par l'intermédiaire d'un perçage radial 145 et d'une gorge périphérique 147 communicant, au repos, avec le perçage radial 170 de la chemise 128.

Le fonctionnement de l'électrovalve selon ce second mode de réalisation va maintenant être exposé, cette électrovalve étant par exemple insérée dans un système de freinage automatique pour remplir différentes fonctions, tel qu'un système d'antipatinage à l'accélération des roues d'un véhicule automobile ou un système d 'antiblocage des roues.

Au repos, tous les éléments occupent la position représentée sur la Figure 4. On a vu plus haut que, dans cette position, les chambres d'extrémité 72, 74 et 76 sont reliées au réservoir 400, et que la chambre de réaction 146 communique également avec le réservoir 400 par le perçage radial 145, la gorge périphérique 147 et le perçage radial 170 débouchant dans la chambre 172.

Le récepteur de pression 200 se trouve alors relié au réservoir de fluide sous basse pression 400 par l'intermédiaire du passage 168, du conduit 166, du perçage radial 162, de la gorge 160 du distributeur 130, du perçage 158 et de la chambre de réaction 146.

Lorsque le calculateur commande l'augmentation du courant circulant dans le bobinage 10, ce courant engendre, par l'intermédiaire des pièces polaires 12 et 14 une force sur le corps magnétique 126 qui se déplace alors à l'encontre de l'action du ressort 134, et qui entraîne dans son mouvement le distributeur 130 grâce à la coupelle 132.

Le courant augmentant dans le bobinage 10 entraîne le déplacement du distributeur 130 à l'encontre de l'action du ressort 134. Ce déplacement entraîne le déplacement de la gorge 147 pour interrompre la communication entre elle et le perçage 170. La chambre de réaction 146 et le récepteur de pression 130 se trouvent alors isolés du réservoir 400.

L'intensité du courant circulant dans le bobinage 10, et la position du distributeur 130, sont alors comprises dans les plages de valeurs pour lesquelles il y a proportionnalité entre l'effort exercé sur le distributeur 130 et le courant de commande.

Le calculateur peut alors moduler le courant dans cette plage de valeurs. Si l'intensité du courant augmente, le distributeur 130 est sollicité à l'encontre de l'action du ressort 134, de sorte que la gorge 184 du distributeur 130 vient en communication avec le perçage 153 relié au générateur 300.

Comme dans le premier mode de réalisation, la gorge 160 du distributeur 130 est dimensionnée pour que, dans toutes les positions du distributeur 130 et du corps magnétique 126, elle communique avec le perçage 162 de communication avec le moteur de frein 200, de sorte que la chambre de réaction 146 est en communication permanente avec le moteur de frein 200. La pression qui s'exerce dans l'alésage 146 sur le distributeur 130, sur la section transversale de ce dernier correspondant à la section transversale de l'aiguille 150 est donc en permanence égale à la pression régnant dans le moteur de frein 200. L'alésage 46 constitue de la même façon une chambre de réaction hydraulique, en coopération avec l'aiguille 50, coulissant de façon quasi-étanche dans l'alésage 46.

Cependant, selon ce mode de réalisation, la force de réaction ainsi créée s'ajoute à la force exercée par le ressort 134, et s'oppose à la force d'actionnement engendrée par le bobinage 10.

Ainsi, en modulant le courant circulant dans le bobinage 10, le distributeur 130 va adopter une position qui est fonction de la pression régnant dans la chambre de réaction 146, et on pourra ainsi, en pilotant judicieusement ce courant, appliquer au moteur de frein 200 la pression de fluide désirée. En effet, la réaction hydraulique engendrée dans la chambre de réaction 146 va alors automatiquement ouvrir ou fermer les communications entre le moteur de frein 200 et le générateur 300 ou le réservoir 400 pour chaque valeur déterminée de l'intensité du courant circulant dans le bobinage 10.

Ainsi, si l'intensité du courant diminue, la force exercée par le corps magnétique 126 sur le distributeur 130 diminue et ce dernier est sollicité en direction de sa position de repos par le ressort 134, de sorte que la communication entre la gorge 184 du distributeur 130 avec le perçage 153 soit interrompue, et que la communication entre la gorge 147 et le perçage 170 soit rétablie. La chambre de réaction 146 et le récepteur de pression 200 sont donc reliés au réservoir 400, et la pression dans le récepteur de pression 200 peut donc diminuer.

On voit donc que le freinage du véhicule peut être assuré sous l'effet de la seule commande électrique du calculateur, ce dernier modulant, par exemple par découpage, l'intensité du courant dans le bobinage 10 pour moduler en conséquence la pression dans le récepteur 200.

On voit ainsi qu'avec une électrovalve selon ce second mode de réalisation, lorsque l'intensité du courant dans le bobinage 10 augmente, la pression dans le moteur de frein 200 augmente proportionnellement. Une telle électrovalve permet ainsi d'assurer un freinage par commande purement électrique, qui peut présenter toutes les caractéristiques désirées, et mémorisées dans le calculateur. Elle peut remplir par exemple les fonctions d'antiblocage des roues, d'antipatinage à l'accélération, de retenue en côte du véhicule, de maintien de vitesse constante ou de distance constante par rapport au véhicule précédent, ces exemples n'étant pas limitatifs.

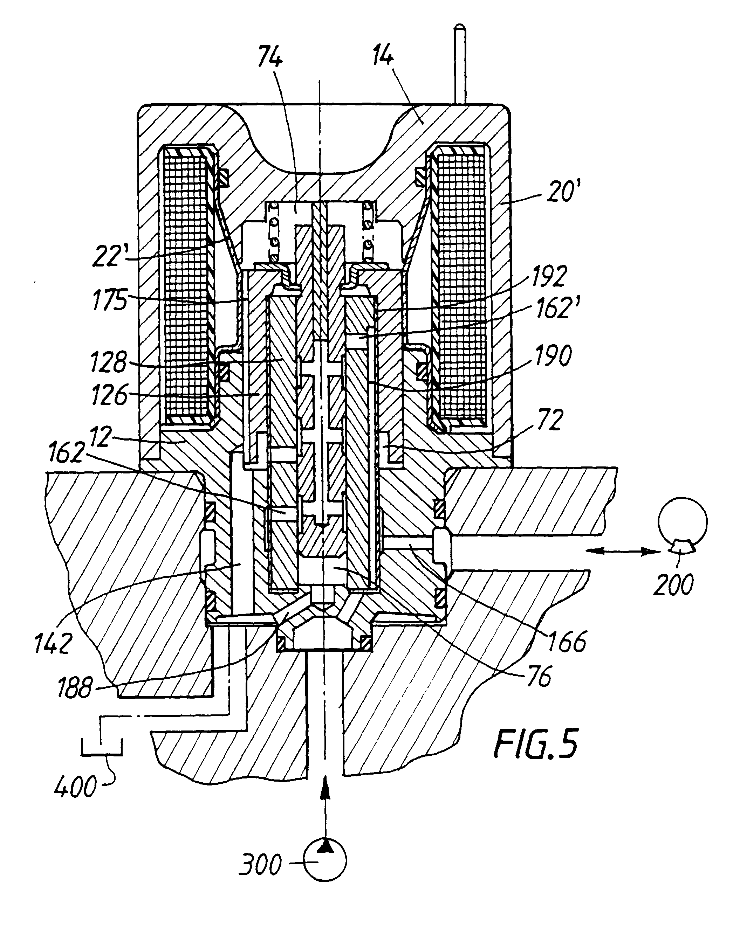

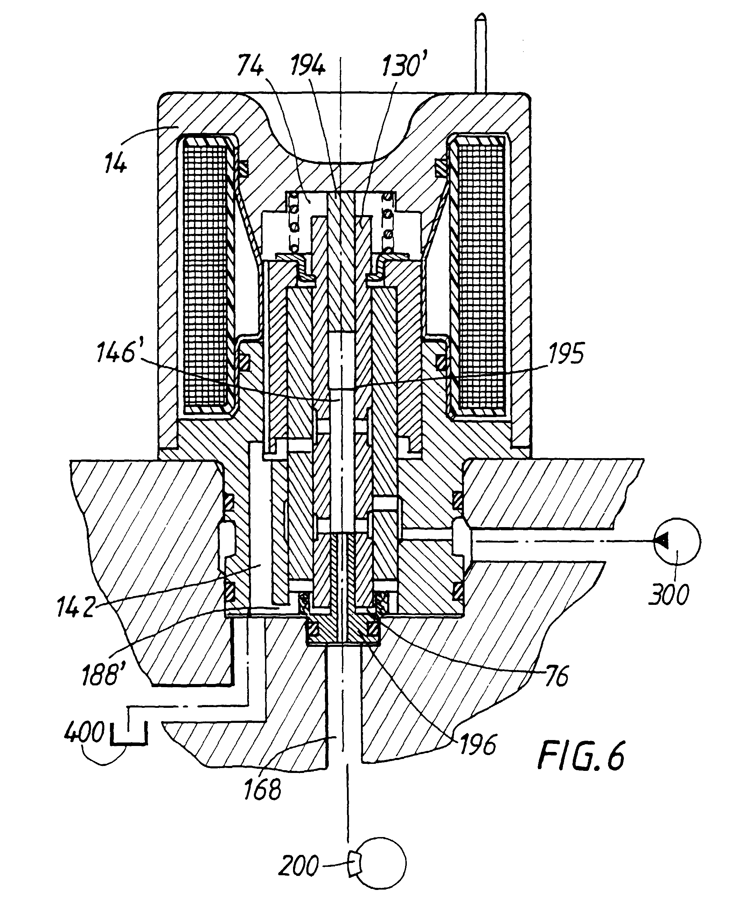

Comme pour le premier mode de réalisation, on peut apporter diverses modifications et variantes à l'électrovalve qui vient d'être décrite, et qui sont représentées sur les Figures 5 et 6.

C'est ainsi que, comme on le voit sur la Figure 5, la pièce polaire 14 et la carcasse 20' sont réalisées d'une seule pièce, et on peut donner au manchon en matériau amagnétique 22' une forme épousant celles des pièces polaires 12 et 14.

De même, on peut éviter de pratiquer les perçages 78 et 80 dans la chemise 128 en reliant la chambre 76 directement au conduit 142 au moyen d'un perçage radial 188. Les chambres 72 et 74 sont mises en communication permanente entre elles et avec le réservoir 400 au moyen de rainures axiales 175 pratiquées à la périphérie extérieure du corps magnétique 126.

On voit également sur la Figure 5 que l'on peut aussi éviter de pratiquer les perçages 152 et 153 dans la chemise 128 en pratiquant des rainures axiales 190 à la périphérie extérieure de la chemise 128, un fourreau 192 étant disposé autour de la chemise 128. Les rainures 190 font ainsi communiquer le conduit 166 avec un perçage radial 162' dans la chemise 128, jouant le même rôle que le perçage 153 de la Figure 4.

Des ouvertures sont pratiquées dans le fourreau 192 pour faire communiquer le conduit 166 de liaison avec le récepteur 200 avec l'alésage radial 162 dans la chemise 128.

On peut ainsi simplifier dans une large mesure l'usinage de la chemise 128. Le fonctionnement de l'électrovalve de la Figure 5 est par ailleurs totalement identique à celui de l'électrovalve de la Figure 4 et ne sera donc pas exposé en détail.

On a représenté sur la Figure 6 une autre variante des modes de réalisation représentés sur les Figures 4 et 5. Le distributeur 130' est formé avec un alésage axial étagé traversant 146'. Le distributeur 130' coulissé de façon étanche, par sa partie de plus grand diamètre, autour d'une aiguille 194, assurant l'étanchéité entre la chambre 74 et l'alésage 146'. L'aiguille 194 est en appui sur la pièce polaire 14, ou est solidaire de cette dernière par exemple par vissage.

Le distributeur 130' coulisse par ailleurs de façon étanche, par sa partie de plus petit diamètre, autour d'une aiguille creuse 196, solidaire de la pièce polaire 12 par exemple par vissage. L'aiguille creuse 196 assure l'étanchéité entre la chambre 76 et l'alésage 146', tout en permettant la communication entre cet alésage 146' et le passage 168 relié au récepteur de pression 200. La chambre 76 est en communication permanente avec le conduit 142 et le réservoir 400 par un perçage 188' dans la pièce polaire 12. Un épaulement radial 195 sépare les deux parties de plus petit et de plus grand diamètre de l'alésage 146'.

Le fonctionnement de l'électrovalve représentée sur la Figure 6 est identique à celui qui a été décrit en relation avec la Figure 4. En particulier, la pression qui s'exerce dans l'alésage 146' sur le distributeur 130', sur la section transversale de ce dernier correspondant à la section transversale de l'épaulement radial 195 est en permanence égale à la pression régnant dans le moteur de frein 200. L'alésage 146' constitue ainsi une chambre de réaction hydraulique, par l'intermédiaire de l'épaulement 195.

Comme on l'a vu plus haut, en modulant le courant circulant dans le bobinage 10, le distributeur 130' va adopter une position qui est fonction de la pression régnant dans la chambre de réaction 146', et on pourra ainsi, en pilotant judicieusement ce courant, appliquer au moteur de frein 200 la pression de fluide désirée, la réaction hydraulique engendrée dans la chambre de réaction 146' sur l'épaulement 195 va alors automatiquement ouvrir ou fermer les communications entre le moteur de frein 200 et le générateur 300 ou le réservoir 400 pour chaque valeur déterminée de l'intensité du courant circulant dans le bobinage 10.

L'électrovalve réalisée selon ce second mode de réalisation présente les mêmes avantages que ceux du premier mode de réalisation ; la présence des trois conduits de liaison avec le moteur de frein 200, le générateur 300 et le réservoir 400 permet d'obtenir une électrovalve qu'il suffit d'insérer dans son support 18 pour la rendre immédiatement opérationnelle sans autre opération, ce qui simplifie les opérations d'installation et de maintenance. En disposant, comme on l'a représenté, un de ces conduits dans l'axe de l'électrovalve, un de ces conduits décalé axialement, et le dernier conduit disposé radialement, la position angulaire de l'électrovalve autour de son axe peut alors être quelconque, ce qui simplifie encore plus son installation sur le support 18. On pourra intégrer dans ce support 18 le générateur 300 lui-même, soutirant le fluide dont il a besoin dans le passage 44, ce qui permet de raccourcir et de simplifier les diverses connexions hydrauliques. D'autre part, les chambres 72, 74 et 76 aux extrémités du corps magnétique et du distributeur étant reliées entre elles et au réservoir de fluide sous basse pression 400, le déplacement des pièces mobiles sous l'action de la force engendrée par le courant circulant dans le bobinage 10 se trouve ainsi facilité. Il en résulte que la consommation électrique de l'électrovalve est réduite.

## Revendications

1. Electrovalve de régulation de pression pour un circuit hydraulique comprenant au moins un générateur de fluide sous pression (300), un récepteur de pression (200) et un réservoir de fluide sous basse pression (400), l'électrovalve comportant un bobinage électrique (10) coopérant avec deux pièces polaires (12,14), un corps magnétique (26;126) mobile sous l'effet d'une force d'actionnement (Φ) engendrée par un champ magnétique créé par le bobinage électrique (10), et un élément distributeur (30,30';130,130') coopérant avec une structure de chemise (28;128) pour commander la communication entre un conduit (66;166) relié au récepteur de pression (200) et l'un (54;154) ou l'autre (42;142) de conduits reliés au générateur de fluide sous pression (300) et au réservoir de fluide sous basse pression (400), l'électrovalve comportant au moins une chambre de réaction (46,46',146,146') communicant en permanence avec le récepteur de pression (200) et déterminant une force de réaction se combinant à la force d'actionnement (Φ) engendrée par le bobinage (10) à l'encontre de la force (F) engendrée par un moyen élastique (34,36;134) sur le corps magnétique mobile (26;126), la structure de chemise (28;128) étant fixe par rapport aux pièces polaires (12,14), et l'élément distributeur (30,30';130,130') coulissant à l'intérieur de la structure de chemise (28;128) caractérisé en ce que l'élément distributeur (30,30';130,130') est susceptible d'être mis en mouvement par le corps magnétique mobile (26;126) coulissant autour de la structure de chemise (28;128).

2. Electrovalve de régulation de pression selon la revendication 1, caractérisée en ce que la chambre de réaction (46,46') communique au repos avec le générateur de fluide sous pression (300) et détermine une force s'ajoutant à la force d'actionnement engendrée par le bobinage (10).

3. Electrovalve de régulation de pression selon la revendication 2, caractérisée en ce que le corps magnétique (26) détermine avec les pièces polaires (12,14) des chambres d'extrémité (72,74) communicant en permanence entre elles, et en ce que l'élément distributeur (30,30') détermine avec les pièces polaires (12,14) des chambres d'extrémité (76,74) communicant en permanence entre elles.

4. Electrovalve de régulation de pression selon la revendication 3, caractérisée en ce que un passage de valve (38,40) est formé dans une (12) pièce polaire, ce passage de valve (38,40) étant fermé au repos, le corps magnétique (26) ouvrant ce passage de valve (38,40) lorsqu'un courant électrique circule dans le bobinage (10) de l'électrovalve, et mettant les chambres d'extrémité (72, 74, 76) en communication avec le réservoir de fluide sous basse pression (400).

5. Electrovalve de régulation de pression selon la revendication 4, caractérisée en ce que la chambre de réaction (46) est formée dans un alésage (46) de l'élément distributeur (30) dans lequel coulisse une aiguille (50) en appui sur une (12) des pièces polaires et dont la section transversale est soumise à la pression régnant dans le récepteur de pression (200).

6. Electrovalve de régulation de pression selon la revendication 4, caractérisée en ce que la chambre de réaction (46') est formée dans un alésage étagé (46') de l'élément distributeur (30'), un épaulement radial (95) séparant les deux parties de plus petit et de plus grand diamètre de l'alésage étagé (46'), la section transversale de l'épaulement radial (95) étant soumise à la pression régnant dans le récepteur de pression (200).

7. Electrovalve de régulation de pression selon la revendication 6, caractérisée en ce que le distributeur (30') coulisse par sa partie de plus petit diamètre autour d'une aiguille (94) en appui sur une (14) des pièces polaires, et par sa partie de plus grand diamètre autour d'une aiguille creuse (96).

8. Electrovalve de régulation de pression selon la revendication 7, caractérisée en ce que l'aiguille creuse (96) permet la communication permanente entre la chambre de réaction (46') et le récepteur de pression (200).

9. Electrovalve de régulation de pression selon la revendication 1, caractérisée en ce que la chambre de réaction (146,146') communique au repos avec le réservoir de fluide sous basse pression (400), et détermine une force s'opposant à la force d'actionnement engendrée par le bobinage (10).

10. Electrovalve de régulation de pression selon la revendication 9, caractérisée en ce que le corps magnétique (126) détermine avec les pièces polaires (12,14) des chambres d'extrémité (72,74) communicant en permanence entre elles et avec le réservoir de fluide sous basse pression (400), et en ce que l'élément distributeur (30,30') détermine avec les pièces polaires (12,14) des chambres d'extrémité (76,74) communicant en permanence entre elles et avec le réservoir de fluide sous basse pression (400).

11. Electrovalve de régulation de pression selon la revendication 10, caractérisée en ce que la chambre de réaction (146) est formée dans un alésage (146) de l'élément distributeur (130) dans lequel coulisse une aiguille (150) en appui sur une (14) des pièces polaires et dont la section transversale est soumise à la pression régnant dans le récepteur de pression (200).

12. Electrovalve de régulation de pression selon la revendication 10, caractérisée en ce que la chambre de réaction (146') est formée dans un alésage étagé (146') de l'élément distributeur (30'), un épaulement radial (195) séparant les deux parties de plus petit et de plus grand diamètre de l'alésage étagé (146'), la section transversale de l'épaulement radial (195) étant soumise à la pression régnant dans le récepteur de pression (200).

13. Electrovalve de régulation de pression selon la revendication 12, caractérisée en ce que le distributeur (130') coulisse par sa partie de plus grand diamètre autour d'une aiguille (194) en appui sur une (14) des pièces polaires, et par sa partie de plus grand diamètre autour d'une aiguille creuse (196).

14. Electrovalve de régulation de pression selon la revendication 13, caractérisée en ce que l'aiguille creuse (196) permet la communication permanente entre la chambre de réaction (146') et le récepteur de pression (200).

## Claims

1. Pressure-regulating solenoid valve for a hydraulic circuit comprising at least one generator (300) of pressurized fluid, a pressure receiver (200) and a reservoir (400) of fluid under low pressure, the solenoid valve including an electrical coil (10) interacting with two pole pieces (12, 14), a magnetic body (26; 126) which can move under the effect of an actuating force (Φ) generated by a magnetic field created by the electrical coil (10), and distributor element (30, 30'; 130, 130') interacting with a sleeve structure (28; 128) in order to command the communication between a duct (66; 166) connected to the pressure receiver (200) and one (54; 154) or other (42; 142) of ducts connected to the generator (300) of pressurized fluid and to the reservoir (400) of fluid under low pressure, the solenoid valve including at least one reaction chamber (46, 46'; 146, 146') permanently communicating with the pressure receiver (200) and determining a reaction force which is added to the actuating force (Φ) generated by the coil (10), counter to the force (F) generated by an elastic means (34, 36; 134) on the movable magnetic body (26; 126), the sleeve structure (28; 128) being stationary with respect to the pole pieces (12, 14), and the distributor element (30, 30'; 130, 130') sliding inside the sleeve structure (28; 128), characterized in that the distributor element (30, 30'; 130, 130') is capable of being set into motion by the movable magnetic body (26; 126) sliding around the sleeve structure (28; 128).

2. Pressure-regulating solenoid valve according to Claim 1, characterized in that the reaction chamber (46, 46') at rest communicates with the generator (300) of pressurized fluid and determines a force which is added to the actuating force generated by the coil (10).

3. Pressure-regulating solenoid valve according to Claim 2, characterized in that the magnetic body (26) determines, together with the pole pieces (12, 14), end chambers (72, 74) permanently communicating with each other, and in that the distributor element (30, 30') determines, together with the pole pieces (12, 14), end chambers (76, 74) permanently communicating with each other.

4. Pressure-regulating solenoid valve according to Claim 3, characterized in that a valve passage (38, 40) is formed in one (12) pole piece, this valve passage (38, 40) being closed at rest, the magnetic body (26) opening this valve passage (38, 40) when an electric current is flowing through the coil (10) of the solenoid valve, and placing the end chambers (72, 74, 76) in communication with the reservoir (400) of fluid under low pressure.

5. Pressure-regulating solenoid valve according to Claim 4, characterized in that the reaction chamber (46) is formed in a bore (46) of the distributor element (30) in which there slides a needle (50) resting against one (12) of the pole pieces, and the cross section of which is subjected to the pressure prevailing in the pressure receiver (200).

6. Pressure-regulating solenoid valve according to Claim 4, characterized in that the reaction chamber (46') is formed in a stepped bore (46') of the distributor element (30'), a radial shoulder (95) separating the two parts of smaller and of larger diameter of the stepped bore (46'), the cross section of the radial shoulder (95) being subjected to the pressure prevailing in the pressure receiver (200).

7. Pressure-regulating solenoid valve according to Claim 6, characterized in that the distributor (30') slides via its smaller diameter part around a needle (94) resting against one (14) of the pole pieces, and via its larger diameter part about a hollow needle (96).

8. Pressure-regulating solenoid valve according to Claim 7, characterized in that the hollow needle (96) allows permanent communication between the reaction chamber (46') and the pressure receiver (200).

9. Pressure-regulating solenoid valve according to Claim 1, characterized in that the reaction chamber (146, 146') at rest communicates with the reservoir (400) of fluid under low pressure, and determines a force which opposes the actuating force generated by the coil (10).

10. Pressure-regulating solenoid valve according to Claim 9, characterized in that the magnetic body (126) determines, together with the pole pieces (12, 14), end chambers (72, 74) communicating permanently with each other and with the reservoir (400) of fluid under low pressure, and in that the distributor element (30, 30') determines, together with the pole pieces (12, 14), end chambers (76, 74) communicating permanently with each other and with the reservoir (400) of fluid under low pressure.

11. Pressure-regulating solenoid valve according to Claim 10, characterized in that the reaction chamber (146) is formed in a bore (146) of the distributor element (130) in which there slides a needle (150) resting against one (14) of the pole pieces, and the cross section of which is subjected to the pressure prevailing in the pressure receiver (200).

12. Pressure-regulating solenoid valve according to Claim 10, characterized in that the reaction chamber (146') is formed in a stepped bore (146') of the distributor element (30'), a radial shoulder (195) separating the two parts of smaller and of larger diameter of the stepped bore (146'), the cross section of the radial shoulder (195) being subjected to the pressure prevailing in the pressure receiver (200).

13. Pressure-regulating solenoid valve according to Claim 12, characterized in that the distributor (130') slides via its larger diameter part about a needle (194) resting against one (14) of the pole pieces, and via its larger diameter part about a hollow needle (196).

14. Pressure-regulating solenoid valve according to Claim 13, characterized in that the hollow needle (196) allows permanent communication between the reaction chamber (146') and the pressure receiver (200).

## Patentansprüche

1. Elektroventil zur Druckregelung für einen Hydraulikkreis, der mindestens einen Druckfluidgenerator (300), einen Druckempfänger (200) und ein Niederdruckfluidreservoir (400) enthält, wobei das Elektroventil eine elektrische Spule (10) beinhaltet, die mit zwei Polschuhen (12, 14) zusammenwirkt, einen Magnetkörper (26; 126), der unter einer Antriebskraft (φ) bewegbar ist, die durch ein von der elektrischen Spule (10) erzeugtes Magnetfeld hervorgerufen wird, und ein Verteilerelement (30, 30'; 130, 130'), das mit einer Hüllenstruktur (28; 128) zusammenwirkt, um die Verbindung zwischen einem Kanal (66; 166), der an den Druckempfänger (200) angeschlossen ist, und dem einen Kanal (54; 154) oder dem anderen Kanal (42; 142) zu steuern, die mit dem Druckfluidgenerator (300) und mit dem Niederdruckfluidreservoir (400) verbunden sind, wobei das Elektroventil mindestens eine Reaktionskammer (46, 46'; 146, 146') aufweist, die ständig mit dem Druckempfänger (200) in Verbindung steht und die eine Reaktionskraft verursacht, die zusammen mit der von der Spule (10) erzeugten Antriebskraft (φ), welche einer durch ein elastisches Mittel (34, 36; 134) erzeugten Kraft (F) entgegenwirkt, auf den beweglichen Magnetkörper einwirkt, wobei die Hüllenstruktur (28; 128) im Bezug auf die Polschuhe (12, 14) feststehend ist und das Verteilerelement (30, 30'; 130, 130') im Inneren der Hüllenstruktur (28; 128) gleiten kann, dadurch gekennzeichnet, daß das Verteilerelement (30, 30'; 130, 130') durch den Magnetkörper (26; 126) in Bewegung gesetzt werden kann, der um die Hüllenstruktur (28; 128) gleiten kann.

2. Druckregel-Elektroventil nach Anspruch 1, dadurch gekennzeichnet, daß die Reaktionskammer (46, 46') im Ruhezustand mit dem Druckfluidgenerator (300) in Verbindung steht und eine Kraft verursacht, die zu der von der Spule (10) erzeugten Antriebskraft hinzukommt.

3. Druckregel-Elektroventil nach Anspruch 2, dadurch gekennzeichnet, daß der Magnetkörper (26) zusammen mit den Polschuhen (12, 14) äußere Kammern (72, 74) bildet, die ständig miteinander in Verbindung stehen, und daß das Verteilerelement (30, 30') zusammen mit den Polschuhen (12, 14) äußere Kammern (74, 76) bildet, die ständig miteinander in Verbindung stehen.

4. Druckregel-Elektroventil nach Anspruch 3, dadurch gekennzeichnet, daß ein Ventildurchgang (38, 40) in einem (12) der Polschuhe ausgebildet ist, wobei dieser Ventildurchgang (38, 40) im Ruhezustand geschlossen ist, wobei der Magnetkörper (26) diesen Ventildurchgang (38, 40) öffnet, wenn ein elektrischer Strom in der Spule (10) des Elektroventils fließt, und die äußeren Kammern (72, 74, 76) mit dem Niederdruckfluidreservoir (400)in Verbindung bringt.

5. Druckregel-Elektroventil nach Anspruch 4, dadurch gekennzeichnet, daß die Reaktionskammer (46) in einer Bohrung (46) des Verteilerelements (30) ausgebildet ist, in der eine sich an einem (12) der Polschuhe abstützende Nadel (50) gleiten kann, deren Querschnitt dem im Druckempfänger (200) herrschenden Druck ausgesetzt ist.

6. Druckregel-Elektroventil nach Anspruch 4, dadurch gekennzeichnet, daß die Reaktionskammer (46) in einer gestuften Bohrung (46') des Verteilerelementes (30') ausgebildet ist, wobei eine radiale Schulter (95) die beiden Abschnitte mit kleinerem und größerem Durchmesser der gestuften Bohrung (46') trennt, wobei der Querschnitt der radialen Schulter (95) dem im Druckempfänger (200) herrschenden Druck ausgesetzt ist.

7. Druckregel-Elektroventil nach Anspruch 6, dadurch gekennzeichnet, daß der Verteiler (30') mit seinem Abschnitt mit kleinerem Durchmesser um eine sich an einem (14) der Polschuhe abstützende Nadel (94) gleiten kann und mit seinem Abschnitt mit größeren Durchmesser um eine Hohlnadel (96).

8. Druckregel-Elektroventil nach Anspruch 7, dadurch gekennzeichnet, daß die Hohlnadel (96) die ständige Verbindung zwischen der Reaktionskammer (46') und dem Druckempfänger (200) gestattet.

9. Druckregel-Elektroventil nach Anspruch 1, dadurch gekennzeichnet, daß die Reaktionskammer (146, 146') im Ruhezustand mit dem Niederdruckfluidreservoir (400) in Verbindung steht und eine Kraft verursacht, die der von der Spule (10) erzeugten Antriebskraft entgegenwirkt.

10. Druckregel-Elektroventil nach Anspruch 9, dadurch gekennzeichnet, daß der Magnetkörper (126) zusammen mit den Polschuhen (12, 14) äußere Kammern (72, 74) bildet, die ständig miteinander und mit dem Niederdruckfluidreservoir (400)in Verbindung stehen, und daß das Verteilerelement (30, 30') zusammen mit den Polschuhen (12, 14) äußere Kammern (76, 74) bildet, die ständig miteinander und mit dem Niederdruckfluidreservoir (400)in Verbindung stehen.

11. Druckregel-Elektroventil nach Anspruch 10, dadurch gekennzeichnet, daß die Reaktionskammer (146) in einer Bohrung (146) des Verteilerelementes (130) ausgebildet ist, in der eine sich an dem einem (14) der Polschuhe abstützende Nadel (150) gleiten kann, deren Querschnitt dem im Druckempfänger (200) herrschenden Druck ausgesetzt ist.

12. Druckregel-Elektroventil nach Anspruch 10, dadurch gekennzeichnet, daß die Reaktionskammer (146') in einer gestuften Bohrung (146') des Verteilerelementes (30') ausgebildet ist, wobei eine radiale Schulter (195) die beiden Abschnitte mit kleinerem und größerem Durchmesser der gestuften Bohrung (146') trennt, wobei der Querschnitt der radialen Schulter (195) dem im Druckempfänger (200) herrschenden Druck ausgesetzt ist.

13. Druckregel-Elektroventil nach Anspruch 12, dadurch gekennzeichnet, daß der Verteiler (130') mit seinem Abschnitt mit größerem Durchmesser um eine sich an einem (14) der Polschuhe abstützende Nadel gleiten kann und mit seinem Abschnitt mit größerem Durchmesser um eine Hohlnadel (196).

14. Druckregel-Elektroventil nach Anspruch 13, dadurch gekennzeichnet, daß die Hohlnadel (196) die ständige Verbindung zwischen der Reaktionskammer (146') und dem Druckempfänger (200) gestattet.
